# EUROPEAN PATENT APPLICATION

(11) **EP 1 783 766 A2**
(43) Date of publication of application: **09.05.2007**
(21) Application number: 06121175.1
(22) Date of filing: 25.09.2006
(51) Int. Cl.: G11B 20/00

(54) **Information reproduction apparatus and method**

(30) Priority: 31.10.2005 JP 2005317695
(71) Applicant: KABUSHIKI KAISHA TOSHIBA, Tokyo 105-8001 (JP)
(72) Inventor: Yoshida, Hitoshi Toshiba Corporation, Minato-ku, Tokyo 105-8001 (JP); Fukuda, Tomoyuki Toshiba Corporation, Minato-ku, Tokyo 105-8001 (JP); Mawatari, Masahiko Toshiba Corporation, Minato-ku, Tokyo 105-8001 (JP)
(74) Representative: Henkel, Feiler & Hänzel

(57) **Abstract**

Many different key data items can be prepared even if the memory capacity of a key data setting unit (32) incorporated in a content decryption unit (18).
Partial content data items to be successively read are stored in an accumulation medium (11), encrypted with corresponding key data items. There are provided a key data table which stores the key data items, a read processing section (303a) for reading, from the accumulation medium, the partial content data items, a decryption unit (18) for decrypting the read partial content data items, and a set-key selection section (303b) for reading, from the key data table, a key data item for decrypting a partial content data item to be decrypted, and a key data item for decrypting a partial content data item to be processed next at least, the set-key selection section also setting the read key data items in the decryption unit.

## Description

The present invention relates to an information reproduction apparatus and method, and more particularly to an apparatus for reproducing encrypted content data stored in a large-capacity memory, such as a digital versatile disk (DVD) and hard disk, while decrypting the content data.

When content data that requires copyright protection is stored in an information recording medium, it is stored, encrypted. Patent document 1 (Jpn. Pat. Appln. KOKAI Publication No. 2003-122637) discloses a technique of this type. To encrypt content data, key data (called, for example, a title key) is used. To further enhance the confidentiality of content data, a title key itself is encrypted into an encrypted title key and stored in a recording medium. To decrypt the encrypted title key, a medium ID, for example, which specifies a particular device key and disk itself, is used. In this case, if an illegitimate disk or illegitimate reproduction device is used, the encrypted title key cannot be decrypted. Concerning this, see, for example, Jpn. Pat. Appln. KOKAI Publication No. 2003-122637.

In general, one title key is imparted to one title. In this case, if the title key is opened, the copyright of content data cannot be protected. In contrast, if a number of title keys are imparted to one title, and the title key used is switched from one to another during the reproduction of a data stream, the copyright protection of content data is much enhanced.

However, to process a large number of key data items, it is necessary to increase the memory capacity of a key data setting unit incorporated in a content decryption unit.

In general, it is desirable to form the content decryption unit of a semiconductor integrated circuit, so as to prevent the data processing units incorporated therein and currently processed data from being easily detected from the outside. If the memory capacity of the key data setting unit is increased, the size of the resultant hardware is increased, which makes it difficult to design the unit. This inevitably increases the required cost, degrades the yield of production, and makes it difficult to increase the memory capacity so as to increase the amount of key data stored in the memory.

It is an object of embodiments according to the invention to provide an information reproduction apparatus that can prepare a large number of key data items and hence significantly contribute to the copyright protection of content data, even if the memory capacity of a key data setting unit incorporated in a content decryption unit is small, and to provide an information reproduction method employed in such an apparatus.

In accordance with an embodiment of the invention, there is provided an information reproduction apparatus for reproducing encrypted content data recorded in an accumulation medium, the encrypted content data being acquired by encrypting a plurality of partial content data items, to be successively read, using a plurality of key data items corresponding to the partial content data items, comprising:
a key data table which stores the plurality of key data items;
a read processing section configured to read, from the accumulation medium, the partial content data items to be successively read;
a decryption unit configured to decrypt the partial content data items read by the read processing section; and
a set-key selection section configured to read, from the key data table, a first key data item used to decrypt a first one of the partial content data items to be decrypted by the decryption unit, and a second key data item used to decrypt a second one of the partial content data items be processed next at least, the set-key selection section being also configured to set the read key data items in a key data setting unit.

The invention can be more fully understood from the following detailed description when taken in conjunction with the accompanying drawings, in which:
FIG. 1 is an exemplary block diagram showing the configuration of an embodiment of the invention;
FIGS. 2A and 2B are views useful in explaining examples of arrangements of ILVU and examples of reproduced streams;
FIG. 3 is a flowchart useful in explaining an operation example of the apparatus of FIG. 1;
FIG. 4 is a flowchart useful in explaining another operation example of the apparatus of FIG. 1;
FIG. 5 is a block diagram showing the embodiment that operates as shown in FIG. 4; and
FIG. 6 is a block diagram showing yet another embodiment of the invention.

Various embodiments according to the invention will be described hereinafter with reference to the accompanying drawings. In general, according to one embodiment of the invention, in an embodiment of the invention, key data items are stored in a key data table unit prepared in addition to a decryption unit. Therefore, even if a large number of key data items are employed to encrypt a large number of partial content data items, it is sufficient if the key data items are stored in the table. This increases the degree of freedom in designing the apparatus.

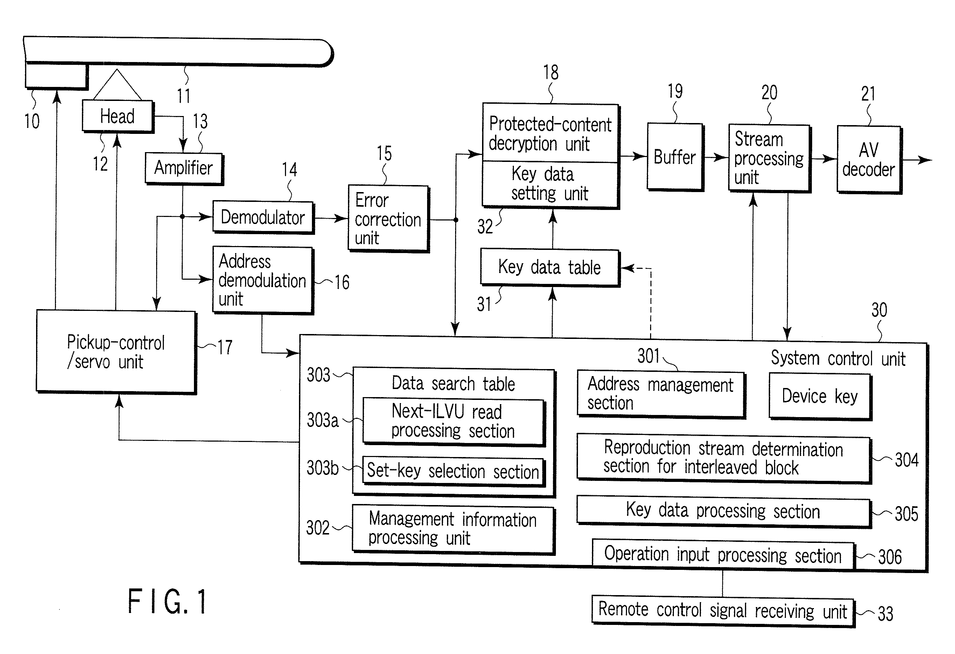

An embodiment of the invention will be described with reference to the accompanying drawings. FIG. 1 shows the configuration of an optical disk reproduction apparatus, to which the invention is applied. As shown, an optical disk (DVD) 11 is spun by a disk motor 10. The information recorded on the optical disk 11 is read and converted into an electric signal by an optical head 12, and then input to an amplifier 13. The output of the amplifier 13 is input to a pickup-control/servo unit 17 and also to a demodulator 14 and address demodulator 16.

The pickup-control/servo unit 17 generates a focusing error signal and tracking error signal, etc., based on the output of the amplifier 13, thereby controlling the actuator of the optical head 12 to control focusing and tracking. The unit 17 also performs control for stabilizing the rotation of the disk motor 10.

The demodulator 14 demodulates a read signal digitized by a digitizer, not shown. In this demodulation, a signal of, for example, 16 bytes is converted into a signal of, for example, 8 bytes, using a conversion table. The demodulated signal is input to an error correction unit 15, where it is subjected to error correction.

The address demodulation unit 16 reads a physical address from the read signal. The read address is input to a system control unit 30 and managed by an address management section 301 incorporated in the control unit 30.

The system control unit 30 can also control the moving position of the optical head 12 via the pickup-control/servo unit 17, and the rotational speed of the disk motor 10.

Management information, such as file system information, contained in the demodulated signal error-corrected by the error correction unit 15, is input to a management information processing section 302 incorporated in the system control unit 30. Key data as part of the management information is written to a key data table 31. The key data table 31 may be formed of a semiconductor memory prepared as a secondary memory, or of a hard disk, not shown, incorporated in the apparatus. The key data recorded on the optical disk 11 is encrypted, and hence is decrypted before it is written to the key data table 31.

The data (encrypted data or non-encrypted data) contained in the demodulated signal output from the error correction unit 15 is supplied to a protected-content decryption unit 18. The protected-content decryption unit 18 includes a register capable of storing at least two key data items, i.e., a key data setting unit 32. The protected-content decryption unit 18 decrypts the input encrypted content data, using the key data. If the input content data is non-encrypted one, it is processed under the control of the system control unit 30, without using the protected-content decryption unit 18.

The content data output from the protected-content decryption unit 18 is input to a stream processing unit 20 via a buffer 19. The stream processing unit 20 subjects, to separation processing, a control packet including a video packet, audio packet, sub-video packet and navigation data, etc. The control packet, such as navigation data, is fetched by the system control unit 30 and managed by the management information processing unit 302.

The video packet, audio packet and sub-video packet are input to an AV decoder 21, where they are decoded. The sub-video packet contains, for example, subtitle data, and is combined with a video signal after being decoded.

The system control unit 30 will now be described in detail. The system control unit 30 controls the entire operation of the apparatus, and is connected to a remote control signal receiving unit 33. The signals received by the remote control signal receiving unit 33 are recognized by an operation input processing section 306. Assume here that the address management section 301 manages, as well as the physical address, the logical address included in the navigation data. Further, assume here that the management information processing section 302 manages, as well as file system management information, management information sent as navigation data, such as attribute information.

A data search table 303 also incorporated in the system control unit 30 comprises a read processing section 303a for reading, for example, the next ILVU (interleave unit or partial content data), and a set-key selection section 303b. The read processing section 303a recognizes the physical address of the ILVU, using the information stored in the address management section 301, thereby controlling the read position of the optical head 12. The set-key selection section 303b selects key data from the key data table 31 and sets it in the key data setting unit 32. The key data set in the key data setting unit 32 is the key data corresponding to the read ILVU.

The system control unit 30 further comprises a stream determination section 304 for determining a reproduction stream for an interleaved block. The interleaved block will be described later in detail. When, for example, the optical disk 11 is loaded and the key unique to the disk is detected, the reproduction stream is determined, using this key and a device key 34 unique to the reproduction apparatus. Accordingly, different reproduction streams are determined between different reproduction apparatuses. The determined reproduction stream is the one allowed in the currently used reproduction apparatus.

After determining the reproduction stream, the order of reading of a plurality of ILVUs is specified. This enables the order of key data items corresponding to the ILVUs to be specified. A plurality of key data items are beforehand stored in the key data table 31. A key data processing section 305 incorporated in the system control unit 30 determines the order of use of key data items, and then controls the set-key selection section 303b. On accordance with the order of use of the key data items, the set-key selection section 303b designates key data in the key data table 31, and sets it in the key data setting unit 32.

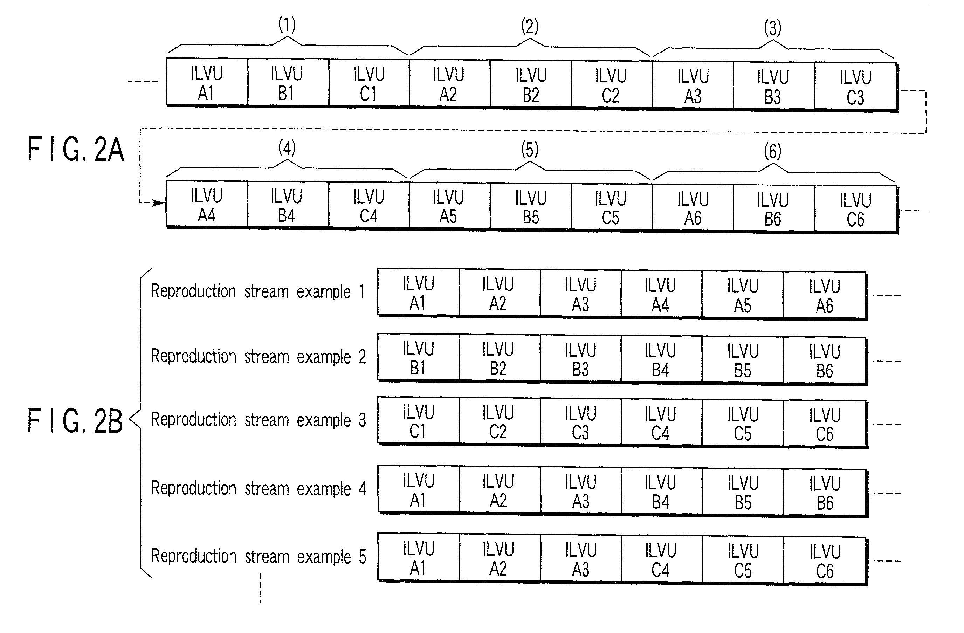

FIG. 2A schematically shows part of an interleaved block provided on the track of an optical disk. The shown interleaved block is an example in which one stream is divided into six blocks. Assume that each one of the six blocks is set as an interleave unit block (ILVUB). In case of FIG. 2A, interleave unit blocks ILVUB1, ILVUB2, ILVUB3, ILVUB4, ILVUB5 and ILVUB6 are acquired. Further, in each interleave unit block, interleave units A, B and C of the same data are prepared and interleaved.

Specifically, interleave units A1, A2, A3, A4, A5 and A6, interleave units B1, B2, B3, B4, B5 and B6, and interleave units C1, C2, C3, C4, C5 and C6, which are identical in content, respectively, and have different encrypted key data items, are prepared. The interleave units A, B and C are alternately arranged in the interleave unit blocks. It is not always necessary to impart different key data items to the respective units. However, the greater the number of key data items, the greater the protection effect of content data. Since each of the interleave units is part of content data, it may also be called partial content data.

If the interleave units 1 to 6 are read in this order, the story of the content data is consistent. Accordingly, various reproduction streams as shown in FIG. 2B can be acquired. These streams provide the same story.

The reproduction stream employed in the reproduction apparatus is determined by the above-mentioned device key. Namely, different reproduction apparatuses employ different reproduction streams. Accordingly, if an illegally copied disk is detected, the reproduction apparatus used to illegally copy data on the disk is detected, which is a clue to the person who illegally copied the data.

Further, it is not necessary to form the interleave block on the entire track of the optical disk. If the interleave block is formed on the entire track, the disk may run out of capacity. To avoid this, the interleave block may be provided at part of content data, for example, at an important scene, or a plurality of interleave blocks may be provided intermittently.

Furthermore, in the above description, the reproduction streams provide the same content. However, it is a matter of course that they may provide different types of content acquired by photography carried out at different angles.

In this embodiment, assume that the interleave units are encrypted by different key data items. In this case, it is necessary to change key data whenever an interleave unit is fetched by the decryption unit 18. Since it is difficult to simultaneously set a large number of key data items in the key data setting unit 32, the reproduction apparatus of the embodiment employs a method for once accumulating the key data items in the key data table 31. When necessary, a minimum necessary number of key data items are transferred from the table 31 to the key data setting unit 32.

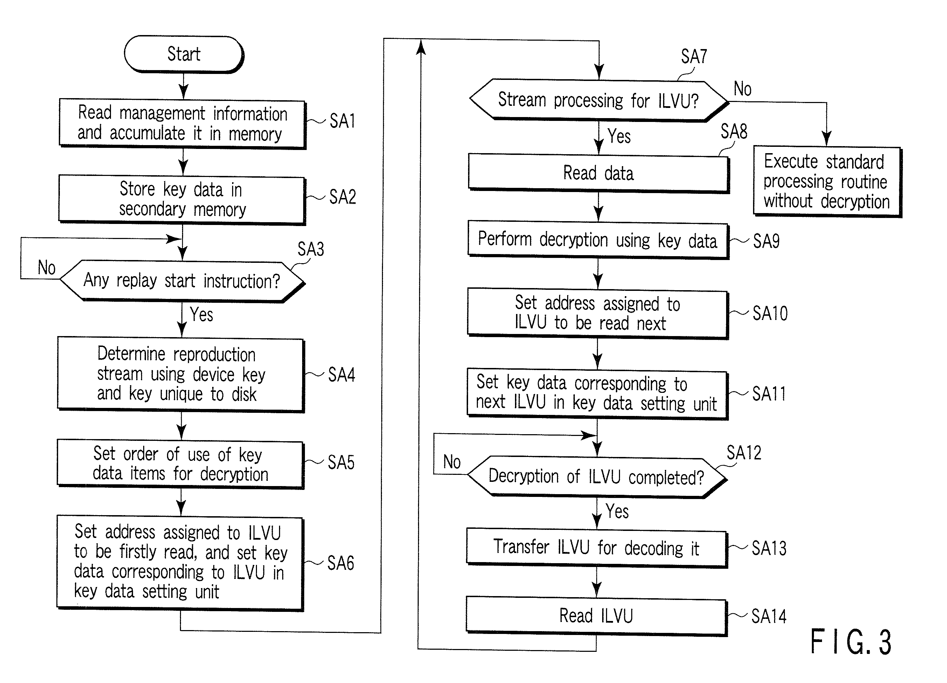

FIG. 3 shows an operation example of the apparatus. When the optical disk 11 is loaded into the apparatus main unit, the disk is rotated, and management information is read therefrom and accumulated in the management information processing unit 302 (step SA1). Subsequently, the encrypted key data is read from the optical disk 11, decoded and stored in the key data table (secondary memory) 31 (step SA2).

If there is an instruction to replay the disk (step SA3), a reproduction stream is determined from the device key and the key (or disk ID) unique to the disk. For instance, one of the streams shown in FIG. 2B is determined (step SA4). When the stream is determined, the order of ILVUs is determined, and hence the order of selection and the order of use of a plurality of key data items for decrypting the ILVUs are determined (step SA5).

Subsequently, the address assigned to the ILVU to be firstly read is set, and the key data corresponding to the ILVU is set in the key data setting unit 32 (step SA6, 303a and 303b in FIG. 1). Thus, the first ILUV is read and set in the protected-content decryption unit 18 (steps SA7, SA8 and SA9). While the decryption unit 18 is executing decryption, the address for reading the next ILVU is set in the next-ILVU read processing section 303a (step SA10), and the key data corresponding to the next ILVU is read from the key data table 31 and set in the key data setting unit 32 (step SA11).

After the decryption of the proceeding ILVU is finished (step SA12), the ILVU is sent to the buffer 19 (step SA13) for decoding, thereby starting the reading of the next ILVU (step SA14). If it is determined that the stream processing of the ILVUs is finished (step SA7), the next processing routine is started without decryption processing.

When the ILVUs are successively processed, the address assigned to each following ILVU is detected by the method described below.

Navigation packs including data search information (DSI) are provided as leading packs for the respective ILVUs. The DSI of a certain ILVU contains the logical address assigned to the next ILVU. Assume here that the ILVUB2 is read, and the DSI of the leading navigation pack thereof is analyzed. In this case, ILVUA1, B1 and C1, and ILVUA3, B3 and C3 are written as the addresses assigned to the ILVUs to be read next. Thus, the DSI of a single ILVU includes the addresses of the proceeding ILVU and next ILVU, which enables both backward replay and forward replay to be carried out. However, note that the reproduction stream is determined by the reproduction apparatus used. If the reproduction stream is not determined, the key data for decrypting the content data becomes useless.

In the above-described ILVU processing routine, the key data for decrypting the next ILVU is set while the proceeding ILVU is being decrypted. However, the invention is not limited to this.

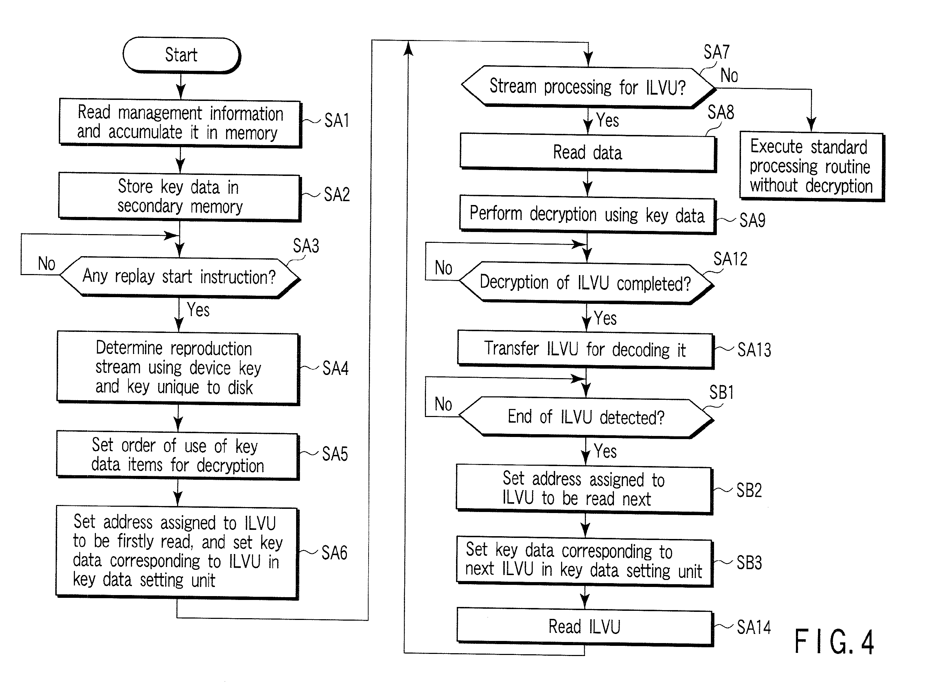

FIG. 4 is a flowchart useful in explaining the operation of another embodiment. In FIG. 4, elements similar to those in FIG. 3 are denoted by corresponding reference numbers. In FIG. 3, the address for reading the next ILVU from the accumulation medium is set at step SA10. Further, the key data corresponding to the next ILVU is set in the key data setting unit at step SA11. However, in the embodiment of FIG. 4, the address for reading the next ILVU from the accumulation medium is set when the decrypted ILVU has been transferred to the buffer 19 (step SB2). Further, at the next step BS3, the key data corresponding to the next ILVU is set in the key data setting unit. At step BS1, it is determined whether the decrypted ILVU has been transferred to the buffer 19.

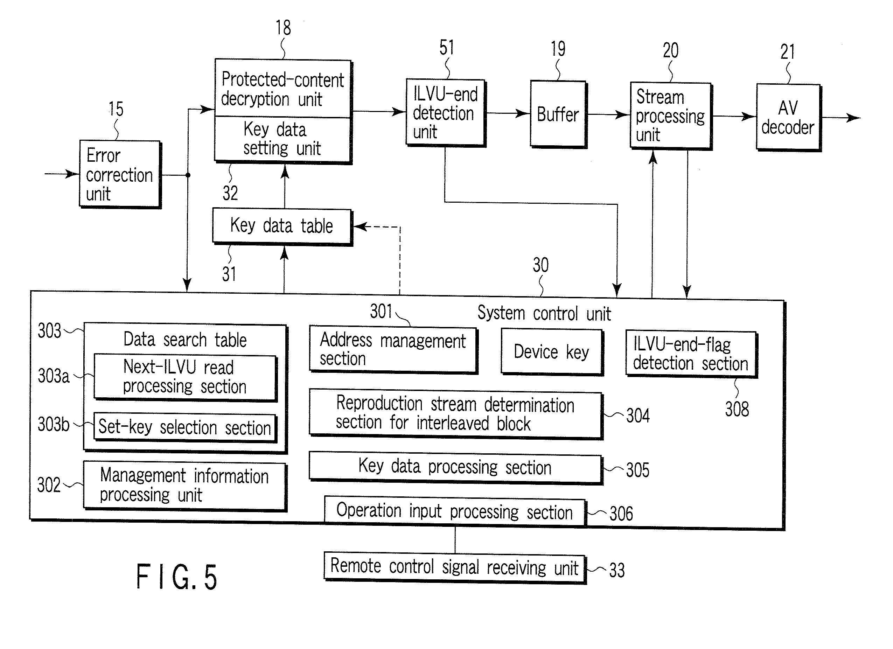

FIG. 5 shows part of the hardware block configured to enable the operation shown in FIG. 4. In FIG. 5, elements similar to those in FIG. 1 are denoted by corresponding reference numbers. In the case of FIG. 5, an ILVU-end detection unit 51 is interposed between the protected-content decryption unit 18 and buffer 19. The ILVU-end detection unit 51 is formed of, for example, a counter for counting the read addresses in the register when the decrypted ILVU is transferred to the buffer. After all decrypted ILVUs are read and transferred to the buffer 19, the ILVU-end detection unit 51 sets an end flag. The end flag is detected by an ILVU-end-flag detection section 308 incorporated in the system control unit 30. Upon detecting the end flag, the ILVU-end-flag detection section 308 controls the next-ILVU read processing section 303a and set-key selection section 303b to thereby enable the operation as shown in FIG. 4.

The invention is not limited to the above-described embodiments. The trigger for controlling the next-ILVU read processing section 303a and set-key selection section 303b may be formed of the following means:

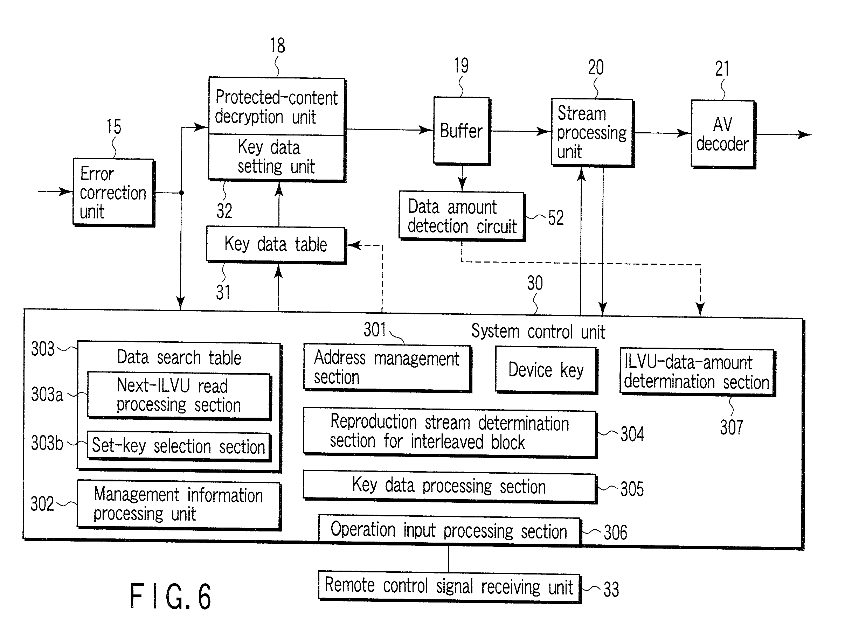

FIG. 6 shows yet another embodiment of the invention. In FIG. 6, elements similar to those in FIG. 1 are denoted by corresponding reference numbers. In the case of FIG. 6, the amount of data stored in the buffer is monitored. In the DVD standards, to realize seamless replay, each ILVU is set so that the maximum and minimum data amounts fall within respective preset ranges. Accordingly, the time at which the next ILVU should be read can be detected by monitoring the data amount of each ILVU. To this end, a detection circuit 52 detects the data amount of the ILVU written to the buffer 19. As a detection method, there is a method for counting the number of data items transferred to the buffer 19, using a counter (data amount detection circuit 52). When an ILVU has substantially been transferred to the buffer 19, i.e., the counter value exceeds a preset threshold value, an ILVU-data-amount determination section 307 incorporated in the system control unit 30 causes the next-ILVU read processing section 303a and set-key selection section 303b to start their operations. The other operations performed in this embodiment are similar to the above-described ones. The invention is not limited to the above-described embodiments, and it is not always necessary to impart different key data items to respective partial content data items.

The present invention is not limited to the above-described embodiments, but may be modified in various ways without departing from the scope. Various inventions can be realized by appropriately combining the structural elements disclosed in the embodiments. For instance, some of the disclosed structural elements may be deleted. Some structural elements of different embodiments may be combined appropriately.

## Claims

1. An information reproduction apparatus for reproducing encrypted content data recorded in an accumulation medium, the encrypted content data being acquired by encrypting a plurality of partial content data items, to be successively read, using a plurality of key data items corresponding to the partial content data items, **characterized by** comprising:
a key data table (31) which stores the plurality of key data items;
a read processing section (303a) configured to read, from the accumulation medium, the partial content data items to be successively read;
a decryption unit (18) configured to decrypt the partial content data items read by the read processing section; and
a set-key selection section (303b) configured to read, from the key data table, a first key data item used to decrypt a first one of the partial content data items to be decrypted by the decryption unit, and a second key data item used to decrypt a second one of the partial content data items be processed next at least, the set-key selection section being also configured to set the read key data items in a key data setting unit (32).

2. The information reproduction apparatus according to claim 1, **characterized in that** setting, in the read processing section (303a), of a read address for reading the second partial content data item, and setting, in the set-key selection section (303b), of the second key data item corresponding to the second partial content data item are carried out after decryption of the first partial content data item is started.

3. The information reproduction apparatus according to claim 1, **characterized by** further comprising:
a buffer configured to receive the first partial content data item decrypted by the decryption unit; and
an end detection unit configured to detect an end of transfer of the first partial content data item from the decryption unit to the buffer,
and wherein setting, in the read processing section (303a), of a read address for reading the second partial content data item, and setting, in the set-key selection section (303b), of the second key data item corresponding to the second partial content data item are carried out when the end detection unit detects the end of transfer of the first partial content data item.

4. The information reproduction apparatus according to claim 1, **characterized by** further comprising:
a buffer configured to receive the first partial content data item decrypted by the decryption unit; and
a data amount detection unit configured to detect a data amount of the first partial content data item transferred from the decryption unit to the buffer
and wherein setting, in the read processing section (303a), of a read address for reading the second partial content data item, and setting, in the set-key selection section (303b), of the second key data item corresponding to the second partial content data item are carried out when the data amount detection unit detects that the data amount of the first partial content data item exceeds a preset value.

5. An information reproduction method for reproducing encrypted content data recorded in an accumulation medium, the encrypted content data being acquired by encrypting a plurality of partial content data items, to be successively read, using a plurality of key data items corresponding to the partial content data items, **characterized by** comprising:
storing the plurality of key data items in a key data table (31);
reading, from the accumulation medium, the partial content data items to be successively read, using a read processing section (303a);
decrypting the partial content data items read by the read processing section, using a decryption unit (18); and
reading, from the key data table, a first key data item used to decrypt a first one of the partial content data items to be decrypted by the decryption unit, and a second key data item used to decrypt a second one of the partial content data items be processed next at least, and setting the read key data items in a key data setting unit (32), using a set-key selection section (303b).

6. The information reproduction method according to claim 5, **characterized in that** setting, in the read processing section (303a), of a read address for reading the second partial content data item, and setting, in the set-key selection section (303b), of the second key data item corresponding to the second partial content data item are carried out after decryption of the first partial content data item is started.

7. The information reproduction method according to claim 5, **characterized by** further comprising:
detecting an end of transfer of the first partial content data item from the decryption unit to a buffer located in a following stage, using an end detection unit;
and wherein setting, in the read processing section (303a), of a read address for reading the second partial content data item, and setting, in the set-key selection section (303b), of the second key data item corresponding to the second partial content data item are carried out when the end detection unit detects the end of transfer of the first partial content data item.

8. The information reproduction method according to claim 5, **characterized by** further comprising:
detecting a data amount of the first partial content data item transferred from the decryption unit to a buffer located in a following stage, using a data amount detection unit,
and wherein setting, in the read processing section (303a), of a read address for reading the second partial content data item, and setting, in the set-key selection section (303b), of the second key data item corresponding to the second partial content data item are carried out when the data amount detection unit detects that the data amount of the first partial content data item exceeds a preset value.

9. The information reproduction method according to claim 5, **characterized in that** the partial content data items are interleave units defined in digital versatile disk (DVD) standards, and a read address for reading a second one of the interleave units is read from data search information provided at a top of a first one of the interleave units.

10. The information reproduction method according to claim 5, **characterized in that** the partial content data items are interleave units defined in digital versatile disk (DVD) standards, and a plurality of reproduction streams are permitted to be set for an interleaved block formed of the interleave units, one of the reproduction streams being specified based on a device key.
